(19) Europäisches Patentamt
European Patent Office
Office européen des brevets

(11) Veröffentlichungsnummer: **0 193 791**
**B1**

(12) **EUROPÄISCHE PATENTSCHRIFT**

(45) Veröffentlichungstag der Patentschrift: **26.07.89**

(51) Int. Cl.⁴: **C 08 G 18/30**, C 08 G 18/10, C 08 K 3/34

(21) Anmeldenummer: **86102116.0**

(22) Anmeldetag: **19.02.86**

(54) **Verfahren zur Herstellung von nichtgeschäumten Formkörpern.**

(30) Priorität: **02.03.85 DE 3507374**

(43) Veröffentlichungstag der Anmeldung: **10.09.86 Patentblatt 86/37**

(45) Bekanntmachung des Hinweises auf die Patenterteilung: **26.07.89 Patentblatt 89/30**

(84) Benannte Vertragsstaaten: **BE CH DE FR GB IT LI NL SE**

(56) Entgegenhaltungen:
**DE-A-2 651 400**
**FR-A-1 084 369**

(73) Patentinhaber: **BAYER AG, D-5090 Leverkusen 1 Bayerwerk (DE)**

(72) Erfinder: **Orywol, Wilfried, Rotdornweg 8, D-5063 Overath (DE)**
Erfinder: **Ehrhard, Fritz, Dr., Händelstrasse 2, D-4040 Neuss (DE)**
Erfinder: **Uerdingen, Walter, Dr., Humperdinckstrasse 41, D-5090 Leverkusen 1 (DE)**

**EP 0 193 791 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein neues Verfahren zur Herstellung von nicht-geschäumten Formkörpern nach der Gießharztechnologie durch Umsetzung von organischen Polyisocyanaten mit organischen Polyhydroxylverbindungen und/oder Polyepoxiden unter Mitverwendung von Wasser als Kettenverlängerungsmittel, welches in Form von wasserhaltigen Alkalialumosilikaten und/oder Alkali-Erdalkali-Alumosilikaten zum Einsatz gelangt.

Die Herstellung von Gießharzen, beispielsweise für den Elektrosektor durch Umsetzung von organischen Polyisocyanaten mit Polyhydroxylverbindungen ist bereits bekannt (vgl. z.B. Kunststoff-Handbuch, Band VII, «Polyurethane» von Becker/Braun Carl Hanser Verlag München, Wien (1983) Seiten 410 bis 425). Derartige Formkörper, die beispielsweise in der Elektroindustrie als Isolatoren Verwendung finden, müssen grundsätzlich blasen- und schaumfrei sein, deswegen gemäß Stand der Technik auch auf eine sorgfältige Entgasung und Trocknung der Ausgangsmaterialien, insbesondere der Polyhydroxylverbindungen, Wert gelegt wird. Im allgemeinen werden den Reaktionsgemischen zusätzlich noch Wasserabsorptionsmittel wie beispielsweise (wasserfreie) Zeolithe zugesetzt, um eine Blasenbildung, hervorgerufen durch die unter Abspaltung von Kohlendioxid ablaufende Reaktion von Isocyanatgruppen mit Wasser mit Sicherheit auszuschließen.

Andererseits ist es bekannt, daß der Einbau von Harnstoffgruppen in Polyurethankunststoffe im allgemeinen zu einer Verbesserung der mechanischen Eigenschaften führt. Harnstoffgruppen können in Polyurethane entweder durch Mitverwendung von Diaminen oder von Wasser als Reaktionspartner für die Isocyanatgruppen eingebaut werden. Bei der Herstellung von Kunststoffen nach der Gießharztechnologie scheidet jedoch die Verwendung von Diaminen praktisch aus, da Diamine bekanntlich eine zu hohe Reaktivität gegenüber Isocyanatgruppen aufweisen, so daß Diamine enthaltende Reaktionssysteme nicht mehr als Gießharze verarbeitbar sind. Im übrigen können Polyisocyanate, Polyhydroxylverbindungen und Diamine enthaltende Reaktionssysteme nicht nach dem Einstufen-Prinzip als Gießharze verarbeitet werden, da die unterschiedliche Reaktivität der Amino- bzw. Hydroxylgruppen gegenüber Isocyanatgruppen zu inhomogenen Reaktionsprodukten führen würde. Die Mitverwendung von Wasser schien aus den genannten Gründen äußerst unzweckmäßig, da bei der Mitverwendung von Wasser mit einer nicht tolerierbaren Blasenbildung gerechnet werden mußte.

Überraschenderweise wurde jetzt jedoch gefunden, daß es durchaus möglich ist, auch in nach der Gießharztechnologie hergestellte, blasenfreie Formkörper auf Polyisocyanat-Basis Harnstoffgruppen durch Mitverwendung von Wasser einzubauen, indem das Wasser dem Reaktionsgemisch in Form von bestimmten wasserhaltigen Zeolithen einverleibt wird.

Das erfindungsgemäße Verfahren gestattet somit erstmals die Herstellung von Harnstoff-modifizierten, blasenfreien Formkörpern nach der Gießharztechnologie auf Basis von Polyisocyanat-Polyadditionsprodukten, wodurch im Falle von elastischen Formkörpern eine bessere Zugfestigkeit und eine bessere Dehnung und im Falle von vernetzten Formkörpern eine bessere Wärmestandfestigkeit, eine höhere Biegefestigkeit und eine verbesserte Schlagzähigkeit im Vergleich zu den entsprechenden harnstofffreien Formkörpern erreicht werden kann.

Gegenstand der Erfindung ist ein Verfahren zur Herstellung von nichtgeschäumten Formkörpern nach der Gießharztechnologie durch Umsetzung in geschlossenen oder offenen Formen von

a) organischen Polyisocyanaten mit

b) organischen Polyhydroxylverbindungen und/oder Polyepoxiden unter Einhaltung eines Äquivalentverhältnisses von Isocyanatgruppen der Komponente a) zu Hydroxyl- und/oder Epoxidgruppen der Komponente b) von 1,1:1 bis 6:1 unter Mitverwendung eines Kettenverlängerungsmittels c) in einer solchen Menge, die dem aus dem Verhältnis a):b) resultierenden Isocyanatüberschuss zumindest äquivalent ist, dadurch gekennzeichnet, daß man als Kettenverlängerungsmittel c) Wasser in Form eines wasserhaltigen Alkalialumosilikats oder eines wasserhaltigen Alkali-Erdalkali-Alumosilikates vom Zeolithtyp verwendet.

Für das erfindungsgemäße Verfahren können alle beliebigen, aus der Polyurethanchemie an sich bekannten Polyisocyanate als Komponente a) eingesetzt werden. Gut geeignete Komponenten a) sind beispielsweise 2,4- und gegebenenfalls 2,6-Diisocyanatotoluol, 4,4-Diisocyanatodiphenylmethan oder dessen Gemische mit 2,4-Diisocyanatodiphenylmethan und/oder mit seinen höheren, mehr als 2 Isocyanatgruppen pro Molekül aufweisenden Homologen (diese Gemische werden in an sich bekannter Weise durch Phosgenierung von Anilin/Formaldehyd-Kondensaten hergestellt), 1,6-Diisocyanatohexan, 2,4,4-Trimethyl-1,6-Diisocyanatohexan oder 1-Isocyanato-3-isocyanatomethyl 3,5,5-trimethyl-cyclohexan (IPDI).

Als Komponente b) kommen beim erfindungsgemäßen Verfahren b1) die aus der Polyurethanchemie an sich bekannten Polyhydroxylverbindungen und/oder b2) beliebige mindestens zwei Epoxidgruppen aufweisende Polyepoxide zum Einsatz.

Geeignete Polyhydroxylverbindungen b1) sind beliebige organische Polyhydroxylverbindungen mit mindestens zwei primären und/oder sekundären alkoholischen Hydroxylgruppen des Molekulargewichtsbereichs 62 bis 6000, vorzugsweise 90 bis 3000. Es handelt sich hierbei entweder um einfache mehrwertige Alkohole wie Ethylenglykol, 1,2-Dihydroxypropan, 2,3-Dihydroxybutan, 1,4-Dihydroxybutan, 1,6-Dihydroxyhexan, Trimethylolpropan oder Glycerin oder um Ethergruppen aufweisende Alkohole wie beispielsweise die Alkoxylierungsprodukte derartiger einfacher Alkohole, wobei als Alkoxylierungsmittel insbesondere

Ethylenoxid- und/oder Propylenoxid zum Einsatz gelangen. Gut geeignete Polyetherpolyole sind beispielsweise Polyethylenglykole oder Polypropylenglykole oder Propoxylierungsprodukte von Trimethylolpropan des genannten Molekulargewichtsbereichs. Beliebige Gemische von verschiedenen Polyetherpolyolen können selbstverständlich auch eingesetzt werden. Weitere Polyhydroxylverbindungen b1) sind beispielsweise die aus der Polyurethanchemie bekannten Polyesterpolyole, beispielsweise die Umsetzungsprodukte von Adipinsäure, Phthalsäure, und/oder Hexahydrophthalsäure mit überschüssigen Mengen an einfachen mehrwertigen Alkoholen der bereits beispielhaft genannten Art. Auch diese Polyesterpolyole weisen im allgemeinen ein Molekulargewicht von maximal 5000 auf. Das Molekulargewicht der beispielhaft genannten Polyhydroxylverbindungen kann aus ihrer Funktionalität und ihrem Hydroxylgruppengehalt berechnet werden. Im Falle der verzweigten Polyesterpolyole kann das Molekulargewicht dampfdruckosmometrisch bestimmt werden. Auch Rizinusöl kann erfindungsgemäß als Komponente b1) zum Einsatz gelangen. Besonders bevorzugt kommen die beispielhaft genannten Polyetherpolyole bzw. deren Gemische mit den beispielhaft genannten einfachen Alkanpolyolen zum Einsatz, wobei die Komponente b1) vorzugsweise eine OH-Zahl innerhalb des Bereichs von 50 bis 1000 aufweist.

Anstelle oder in Kombination mit der beispielhaft offenbarten Komponente b1) können beim erfindungsgemäßen Verfahren als Komponente b) Polyepoxide b2) zum Einsatz gelangen. Als «Polyepoxide» werden im Rahmen der Erfindung beliebige aliphatische, cycloaliphatische, aromatische oder heterocyclische Verbindungen bezeichnet, die (im statistischen Mittel) pro Molekül mindestens 2 Epoxidgruppen aufweisen. Vorzugsweise weisen diese Polyepoxide ein Epoxidäquivalentgewicht von 100 bis 400, vorzugsweise 120 bis 200 auf.

Geeignete Polyepoxide sind beispielsweise Polyglycidylether mehrwertiger Phenole beispielsweise von Brenzkatechin, Resorcin, Hydrochin, 4,4'-Dihydroxydiphenylmethan, aus 4,4'-Dihydroxy-3,3'-dimethyldiphenylmethan, 4,4'-Dihydroxydiphenyldimethylmethan, 4,4'-Dihydroxydiphenylcyclohexan, 4,4'-Dihydroxy-3,3'-dimethyldiphenylpropan, 4,4'-Dihydroxydiphenyl, 4,4'-Dihydroxydiphenylsulfon oder von Tris-(4-hydroxyphenyl)-methan. Weiterhin geeignet sind z.B. Polyepoxidverbindungen auf Basis von aromatischen Aminen und Epichlorhydrin, z.B. N,N-Bis-(2,3-epoxypropyl)-anilin, N,N'-Dimethyl-N,N'-diepoxypropyl - 4,4' - diamino - diphenylmethan, N,N,N',N' - Tetraepoxypropyl - 4,4' - diaminodiphenylmethan.

Außerdem kommen in Frage: Glycidylester mehrwertiger aromatischer, aliphatischer und cycloaliphatischer Carbonsäuren, beispielsweise Phthalsäurediglycidylester, Adipinsäure-diglycidylester.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden.

Vorzugsweise werden für das erfindungsgemäße Verfahren folgende Di- und Polyepoxidverbindungen oder deren Mischungen verwendet: Polyglycidylether mehrwertiger Phenole, insbesondere von Bisphenol A; Polyepoxidverbindungen auf der Basis von aromatischen Aminen, insbesondere Bis-(N-epoxypropyl)-anilin, N,N'-Dimethyl-N,N'-bis-epoxypropyl-4,4'-diamino-diphenylmethan; Polyglycidylester cycloaliphatischer Dicarbonsäuren, insbesondere Hexahydrophthalsäurediglycidylester.

Bei der beim erfindungsgemäßen Verfahren einzusetzenden Komponente c) handelt es sich um Wasser in Form von wasserhaltigen Alkalialumosilikaten oder in Form von wasserhaltigen Alkali-Erdalkali-Alumosilikaten vom Zeolithtyp. Besonders gut geeignet sind synthetische Zeolithe (vgl. Ullmanns Enzyklopädie der technischen Chemie 4. Auflage, Band 17, Seiten 9 bis 18, Verlag Chemie, Weinheim, New York). Neben dem in dieser Literaturstelle bereits genannten Zeolith A sind beispielsweise auch Zeolithe der Struktur

$$Na_6K_6[(AlO_2)_{12}(SiO_2)_{12}] \cdot 27\ H_2O$$

bzw. der Struktur

$$Na_4Ca_4[(AlO_2)_{12}(SiO_2)_{12}] \cdot 27\ H_2O$$

für das erfindungsgemäße Verfahren geeignet.

Die beim erfindungsgemäßen Verfahren einzusetzenden Zeolithe weisen vorzugsweise eine Porenweite von 0,3 bis 0,75 nm und einen Wassergehalt von 4 bis 12, insbesondere 8 bis 10 Gew.-% auf. Unter Wassergehalt ist in diesem Zusammenhang der Wassergehalt zu verstehen, der gravimetrisch nach Tempern bei 320°C ermittelt werden kann. Dies bedeutet, daß die tatsächlich eingesetzten Zeolithe bezüglich ihres Wassergehalts nicht unbedingt den zuletzt genannten Formeln entsprechen müssen, vielmehr ist es möglich, aus diesen Zeolithen durch Lagerung im Trockenschrank beispielsweise bei 100 bis 160°C, vorzugsweise 120 bis 140°C einen Teil des aus den Formeln hervorgehenden Wassers zu entfernen, um einen Wassergehalt innerhalb der obengenannten Bereiche einzustellen. Die Herstellung der beim erfindungsgemäßen Verfahren einzusetzenden Zeolithe mit dem genannten Wassergehalt kann auch beispielsweise dergestalt erfolgen, daß man einen nassen Zeolith der beispielhaft genannten Art bei 100 bis 160°C, vorzugsweise 120 bis 140°C, im Trockenschrank aufbewahrt, bis der nach der obengenannten gravimetrischen Methode bestimmbare Wassergehalt auf einen Wert innerhalb der genannten Bereiche abgesunken ist. Man kann auch einen wasserfreien Zeolith der genannten Art im Wärmeschrank auf eine derartige Temperatur erhitzen, bis der Wassergehalt durch Aufnahme von Luftfeuchtigkeit auf einen Wert innerhalb der genannten Bereiche angestiegen ist. Besonders bevorzugt ist die Verwendung der Zeolithe in Pulverform. Es ist ebenfalls bevorzugt die Zeolithe unmittelbar nach der genannten Hitzebehandlung, d.h. noch in heißem Zustand den Reaktanden, insbesondere der Komponente b), einzuverleiben.

Bei der Durchführung des erfindungsgemäßen Verfahrens können selbstverständlich die aus der Gießharztechnologie üblichen Hilfs- und Zusatzmittel mitverwendet werden. Hierzu gehören beispielsweise Katalysatoren wie tertiäre Amine, wie Benzyldimethylamin, N,N,N',N'-Tetramethyldiaminodiphenylmethan, Permethyldiethylentriamin, N- Methyl-N' (2-dimethylaminoethyl)-piperazin, Etheramine wie Bis(dimethylaminoethyl)-ether oder metallorganische Verbindungen wie Cobaltoctoat oder Dibutylzinndilaurat. Auch Gemische beliebiger derartiger Katalysatoren können eingesetzt werden.

Weitere Hilfs- und Zusatzmittel sind beispielsweise Füllstoffe wie z.B. silikatische Füllstoffe, Quarzmehl, Sillitin, Calciumcarbonat, Mikrodol, Plastorit, Aluminiumoxide, Magnesiumoxid, Titandioxid, Caolin oder Schwerspat. Auch Verstärkungsmaterialien wie z.B. Glasfasern können beim erfindungsgemäßen Verfahren mitverwendet werden.

Bei der Durchführung des erfindungsgemäßen Verfahrens kann nach verschiedenen Varianten verfahren werden. Bei allen diesen Varianten kommen die Komponenten a) und b) in solchen Mengen zum Einsatz, daß das Äquivalentverhältnis von Isocynatgruppen zu Hydroxyl- und/oder Epoxidgruppen bei 1,1:1 bis 6:1, vorzugsweise bei 1,2:1 3:1 liegt. Die Wassermenge, d.h. die Menge des wasserhaltigen Zeoliths wird so bemessen, daß das Wasser, bezogen auf den sich aus der Umsetzung von a) mit b) ergebenden NCO-Überschuß, in mindestens äquivalenten Mengen vorliegt. Im allgemeinen wird die Menge des wasserhaltigen Zeoliths so bemessen, daß für jedes Mol an überschüssigen NCO-Gruppen, bezogen auf die Umsetzung der Komponenten a) und b), 0,5 bis 10 Mol, vorzugsweise 0,5 bis 5 Mol, an im Zeolith vorliegenden Wasser zur Verfügung steht. Auch hier ist unter «im Zeolith vorliegenden Wasser» die Wassermenge zu verstehen, die gravimetrisch als Gewichtsdifferenz nach Tempern bei 320°C ermittelt werden kann.

Gemäß einer ersten Variante des erfindungsgemäßen Verfahrens erfolgt dieses nach dem Einstufenprinzip und zwar dergestalt, daß man die Komponente a) mit der Komponente b) vermischt, wobei die Komponente c) und auch die gegebenenfalls mitverwendeten Hilfs- und Zusatzmittel vorzugsweise der Komponente b) einverleibt werden. Es ist jedoch auch möglich, zumindest einen Teil der Komponente c), der Komponente a) vor deren Durchmischung mit der Komponente b) einzuverleiben. Das so erhaltene Reaktionsgemisch kann sofort nach seiner Herstellung als Gießharz verarbeitet werden. Die Aushärtung der Formkörper erfolgt vorzugsweise drucklos im allgemeinen im Temperaturbereich von 25 bis 130°C. Die Verarbeitbarkeit der Gießharze («potlife») bei Raumtemperatur liegt im allgemeinen bei 15 bis 60 Minuten.

Gemäß einer zweiten Variante des erfindungsgemäßen Verfahrens erfolgt die Verarbeitung nach dem Zweistufenprinzip und zwar dergestalt, daß man zunächst aus den Komponenten a) und b) ein freie Isocyanatgruppen aufweisendes Prepolymer herstellt, welches dann anschließend mit der Komponente c) zum gebrauchsfertigen Gießharz vermischt wird. Die gegebenenfalls mitzuverwendenden Hilfs- und Zusatzmittel werden hierbei vorzugsweise dem NCO-Prepolymeren nach seiner Herstellung zugemischt. Die Durchführung des erfindungsgemäßen Verfahrens nach dem Zweistufenprinzip ist natürlich auf jene Fälle beschränkt, in denen die NCO-Prepolymeren bzw. ihre Abmischungen mit der Komponente c) noch in einem fließfähigen Zustand sind.

Das erfindungsgemäße Verfahren liefert als Verfahrensprodukte Gießlinge mit glatter, zellfreier, konkaver Oberfläche, wie sie charakteristisch ist für Oberflächen, die sich durch den beim Übergang flüssig/fest stattfindenden Reaktionsschrumpf ausbilden. Die nach dem Stand der Technik störende Bildung von $CO_2$-Blasen läuft beim erfindungsgemäßen Verfahren nicht ab. Nach dem erfindungsgemäßen Verfahren wird das Wasser als chemischer Reaktionspartner im adsorbierten Zustand (Adsorbatwasser) dem Reaktionsgemisch zugesetzt. Der Zeolith übernimmt eine doppelte Funktion. Er gibt das Wasser (Feuchte) ab und nimmt das Kohlendioxid als Reaktionsprodukt auf. Spuren von Feuchte, die in den Reaktanden und den Hilfsmitteln bzw. Additiven enthalten sind, stören nicht. Der erfindungsgemäß erzielte Effekt der Unempfindlichkeit der Reaktionsmasse gegenüber der Feuchte der Umgebungsluft war völlig überraschend und nicht vorhersehbar. Das erfindungsgemäße Verfahren bietet den Vorteil, daß Formkunststoffe mit gezielt eingestelltem Eigenschaftprofil hergestellt werden können. So hängt beispielsweise die Härte der Formkunststoffe in erster Linie von der Funktionalität und dem Molekulargewicht der eingesetzten Ausgangsmaterialien ab. Kurzkettige verzweigte Komponenten b) führen beispielsweise zu harten, langkettige lineare Aufbaukomponenten zu elastischen Formkörpern. Es ist jedoch auch möglich, durch Kombination von niedermolekularem Diol oder Polyol mit höhermolekularem langkettigem Diol Hartsegmente mit Weichsegmenten so in massiven Werkstoffen zu vereinigen, daß deren Eigenschaften zwischen den beiden extremen Eigenschaftsbildern weichflexibel und zähhart liegen. Durch Mitverwendung von mineralischen Füllstoffen, die auch in hydratisierter Form eingesetzt werden können, kann der Flammwiderstand, die Bildung raucharmer, nicht korrodierend wirkender Verbrennungsgase, sowie die Kriechstrom-Lichtbogenfestigkeit und Freilufttauglichkeit erhöht werden. Darüberhinaus können bestimmte Verarbeitungs- oder Formstoffeigenschaften durch Zusatz geeigneter Hilfsstoffe wie Flexibilisatoren, Farbstoffe oder Weichmacher beeinflußt werden.

Besonders vorteilhaft ist der Umstand, daß beim erfindungsgemäßen Verfahren auf eine aufwendige Entfernung von Wasserspuren in den Ausgangsmaterialien verzichtet werden kann. So wirkt sich der Wassergehalt der handelsüblichen, als Komponente b) einsetzbaren Polyole von ca. 0,2 bis 0,5% im allgemeinen nicht störend aus. Auch Füllstoffe und Verstärkungsmaterialien wie hydrophile Glasfasern brauchen nicht kostenaufwendig vorgetrocknet zu werden. Bei richtiger Formulierung ist selbst der Kontakt der Reaktionsmasse mit Wasser während der erfindungsgemäßen Umsetzung ohne schädlichen Einfluß, selbst eine Verarbeitung in feuchter Atmosphäre oder ein Härten unter Wasser ist ohne störende Schaumbildung möglich.

Die erfindungsgemäß erhältlichen Verfahrensprodukte finden insbesondere in der Elektroindustrie Verwendung. Sie eignen sich beispielsweise als Isolationsmaterialien, die als Verguß- oder Einbettmassen z.B. in der Kabeltechnik für Garnituren Verwendung finden. Auch ihre Verwendung als konstruktiv tragende Isolierkörper ist möglich. Im Formen- und Lehrenbau sind sie als Abformmassen besonders interessant, wenn in Holzformen gegossen und gehärtet werden soll, die naturgemäß Feuchte abgeben. Die aus den üblichen Ausgangsmaterialien, d.h. insbesondere ohne die erfindungswesentliche Komponente c) hergestellten Gießharze führen im allgemeinen bei einer Verarbeitung in Holzformen zu Gießlingen mit poröser Oberflächenstruktur. Entsprechend nach dem erfindungsgemäßen Verfahren in Holzformen hergestellte Formkörper weisen demgegenüber eine homogene Oberflächenstruktur auf, insbesondere wenn die Härtung von der feuchten Formwand her gestartet wird. Dies ist beispielsweise dadurch zu erreichen, daß die Innenwand der Holzformen mit einem, einen Härtungskatalysator der oben beispielhaft genannten Art aufweisenden Trennmittel beschichtet wird. Geeignete derartige Trennmittel sind beispielsweise Trennmittel W 10 oder Trennmittel S 10 der Firma Th. Goldschmidt AG, Essen. Es handelt sich hierbei um silikonfreie, in Chlorkohlenwasserstoffen gelöste bzw. suspendierte organische Antihaftmittel.

Die hohen mechanischen Festigkeiten der erfindungsgemäß erhältlichen Verfahrensprodukte ermöglichen auch ihre Verwendung zur Herstellung von Armaturen wie z.B. von Ventilgehäusen für Rohrleitungen. Im Falle der Mitverwendung von spezifisch leichten Füllstoffen, beispielsweise solchen auf Basis organischer Phenolharze oder von Glashohlkugeln sind Formkörper einer deutlich unter 1,0 g/cm³ liegenden Dichte zugänglich.

Die nachfolgenden Beispiele dienen der weiteren Erläuterungen des erfindungsgemäßen Verfahrens. Alle Prozentangaben beziehen sich auf Gewichtsprozente.

Beispiele

In den nachfolgenden Beispielen werden folgende Ausgangsmaterialien eingesetzt:

Isocyanat 1: 4,4'-Diisocyanatodiphenylmethan (MDI).

Isocyanat 1a: Im wesentlichen aus 2,4'- und 4,4'-Diisocyanatodiphenylmethan bestehendes Isomerengemisch (Gewichtsverhältnis 2,4':4,4'=60:40).

Isocyanat 1b: Polyisocyanatgemisch der Diphenylmethanreihe mit einer mittleren NCO-Funktionalität von 2,2 und einer Viskosität bei 25°C von 50 mPa.s. bestehend im wesentlichen aus 45% 2,4'-Diisocyanatodiphenylmethan, 45% 4,4'-Diisocyanatodiphenylmethan und 10% höheren homologen Polyisocyanaten der Diphenylmethanreihe.

Isocyanat 1c: Polyisocyanatgemisch der Diphenylmethanreihe mit einer mittleren NCO-Funktionalität von 2,8 und einer Viskosität bei 25°C von 100 mPa.s. bestehend im wesentlichen aus 15% 2,4'-Diisocyanatodiphenylmethan, 45% 4,4'-Diisocyanatodiphenylmethan und 40% höheren Polyisocyanaten der Diphenylmethanreihe.

Isocyanat 2: Gemisch aus 2,2,4- und 2,4,4-Trimethyl-1,6-diisocyanatohexan (TMDI). Viskosität bei 20°C: 5 mPa.s.

Isocyanat 3: 1-Isocyanat-3-isocyanatomethyl-3,5,5-trimethyl-cyclohexan (IPDI).

Polyol 1: Polypropylenglykol
OH-Gehalt 1,7%
Viskosität bei 25°C: 340 mPa.s
Wassergehalt: 0,2%

Polyol 2: Polyethylenglykol
OH-Gehalt 9%
Viskosität bei 25°C: 90 mPa.s

Polyol 3: Polypropylenglykol
OH-Gehalt 1,24%
Viskosität bei 25°C: 500 mPa.s

Polyol 4: propoxyliertes Trimethylolpropan
OH-Gehalt: 12%
Viskosität bei 25°C: 700 mPa.s

Polyol 5: 2,3-Butandiol
OH-Gehalt 38%
Viskosität bei 25°C ca. 117 mPa.s

Polyol 6: Polypropylenglykol
OH-Gehalt 3,5%
Viskosität bei 25°C: 140 mPa.s
hergestellt aus 1,2 Propylenglykol und Propylenoxid

Polyol 7: propoxyliertes Trimethylolpropan
OH-Gehalt 1,7%
Viskosität bei 25° C: 500 mPa.s

Zeolith 1: Handelsübliches Kalium-Natrium-Alumosilikat vom Zeolithtyp A (®) Baylith L-Pulver der Firma BAYER AG, Leverkusen). Porenweite: 0,38 nm. Maximales Wasseraufnahmevermögen: 23% bei 25°C und 50% rel. Luftfeuchtigkeit. Der Zeolith wird zunächst bei Raumtemperatur mit Wasser gesättigt und anschließend während 24 Stunden im Trockenschrank bei 130°C. gelagert. Nach dieser Wärmebehandlung liegt der Wassergehalt bei 8 g Wasser pro 100 g Zeolith-Pulver (die Wasserbestimmung erfolgte gravimetrisch durch Tempern bei 320°C bis zur Gewichtskonstanz; der Wassergehalt ergibt sich aus dem ermittelten Gewichtsverlust).

Zeolith 2: Zeolith 2 entspricht Zeolith 1, mit dem einzigen Unterschied, daß das mit Wasser gesättigte Zeolith-Pulver während 24 Stunden bei 160°C im Trockenschrank gelagert wurde. Der Wassergehalt beträgt hiernach 4g Wasser pro 100g Zeolith-Pulver.

Zeolith 3: Zeolith 3 entspricht Zeolith 1 mit dem Unterschied, daß auf die Wasserbehandlung verzichtet wurde. Das Zeolith-Pulver wurde im Trokkenschrank bei 350°C bis auf einen Restwassergehalt von weniger als 1g Wasser pro 100g Zeolith-Pulver getrocknet.

Die Zeolithe 1–3 werden in den nachfolgenden Beispielen jeweils unmittelbar nach der Hitzebehandlung, d.h. in noch heißem Zustand mit den in den Beispielen genannten Ausgangsmaterialien vermischt.

Zeolith 3P: Paste bestehend aus Zeolith 3 und Rizinusöl im Gewichtsverhältnis 1:1.

Epoxidharz 1: Diglycidylether des Bisphenol A.
Epoxidäquivalentgewicht: 180
Schmelzpunkt: 32–36°C

Epoxidharz 2: N,N-Bis-(2,2-epoxypropyl)-anilin
Epoxidäquivalentgewicht: 120
Viskosität bei 25°C: 110–150 mPa.s
Handelsprodukt der Bayer AG:
®Lekutherm X50

Epoxidharz 3: Diglycidylester der Hexahydrophthalsäure.
Epoxidäquivalentgewicht: 175
Viskosität bei 25°C: 600–900 mPa.s
Handelsprodukt der Bayer AG: ®Lekutherm X 100

Amin 1: N-Methyl-N'-(N",N"-dimethylaminoethyl)-piperazin
Dichte bei 25°C: 0,9g/cm³
Siedebereich bei 1,01 bar (760 mmHg): 210–225°C

Amin 2: Permethyldiethylentriamin

Amin 3: N,N,N',N'-Tetramethyl-4,4'-diaminodiphenylmethan
Schmelzpunkt: 86–89°C

Amin 4: N,N-Dimethylbenzylamin

Katalysator 1: Kobalt (II) octoat

Katalysator 2: Dibutylzinndilaurat

Beispiel 1

In einem Becherglas wird durch Mischen bei Raumtemperatur mit einem Rührwerk, ohne daß das Polyol durch eine Wärmevakuumbehandlung vorgetrocknet wurde, eine Reaktionsmasse aus folgenden Komponenten hergestellt:

25 g Isocyanat 1a
100 g Polyol 1
80 g Zeolith 1
4,0 g Amin 1

Die Reaktanden stehen im Molverhältnis

$NCO:OH:H_2O = 4:2:7$

Nach Härtung bei Raumtemperatur während 24h und Nachtempern bei 80°C während 5h entsteht ein blasenfreier massiver Reaktionsformstoff von elastomerer Einstellung.

Formstoffaussehen:

| | |
|---|---|
| Volumenstruktur | homogen massiv |
| Oberfläche | konkav |
| Konstanz | festelastisch |

Beispiel 2 (Plattenherstellung)

Es wird eine Reaktionsmasse durch Mischen der Komponenten des Beispiels 1 bei Raumtemperatur ohne Wärme-Vakuumbehandlung hergestellt: Gießviskosität bei 25°C: 2900 mPa.s, Potlife: 15 Minuten.

Zur Anfertigung einer 4 mm Platte im Format DIN A4 wird diese Masse in eine mit einem handelsüblichen Trennmittel auf Silikonbasis behandelte Aluminiumform gegossen, während 3h bei Raumtemperatur ausgehärtet und 24h bei 80°C nachgetempert. Man erhält ein PUR-Elastomer mit folgenden Eigenschaften.

Formstoffeigenschaften

| | | | |
|---|---|---|---|
| Shore Härte A | DIN 53505 | | 77 |
| Reißfestigkeit | DIN 53504 | (MPa) | 5 |
| -dehnung | DIN 53504 | (%) | 500 |
| Stoßelastizität | DIN 53512 | (%) | 30 |
| Glastemperatur | DIN 53445 | (°C) | –36 |

Bei Abwesenheit von $H_2O$ in der Reaktionsmasse erhält man mürbe Formstoffe mit Reißdehnungen von <100% bzw. hochviskose Flüssigkeiten.

Beispiel 3 (Oneshot/Prepolymer-Verfahren)

Die Umsetzung läßt sich nach dem Eintopf- oder dem Polymerprinzip durchführen. Wie in Tabelle 1 angegeben, werden alle Komponenten durch Rühren gemischt.

Nach dem Prepolymerprinzip wird zunächst das Polyol 1 mit dem Isocyanat 1a und dem Katalysator 2 durch Rühren zum Prepolymer umgesetzt (Stufe A). Anschließend wird Zeolith 1 und Amin 1 zugegeben und weitergerührt (Stufe B).

Es ergaben sich die gleichen Formstoffwerte.

Tabelle 1 (Mengenangaben in g)

| | | Eintopf | Prepolymer Stufe A | Verfahren Stufe B |
|---|---|---|---|---|
| Zusammensetzung: ($OH:NCO:H_2O = 2:4:5$) | | | | |
| Polyol 1 | | 100 | 100 | – |
| Isocyanat 1a | | 25 | 25 | – |
| Zeolith 1 | | 50 | – | 50 |
| Amin 1 | | 0,1 | – | 0,1 |
| Katalysator 2 | | 0,2 | 0,2 | – |
| Reaktionsmasse | | 175,3 | 125,2 | 50,1 |
| | | | 175,3 | |
| Härten | | 60°C/16h + 100°C/1h | | |
| Formstoffwerte: | | | | |
| Shore Härte A | DIN 53505 | 86 | 78 | |
| Reißfestigkeit | DIN 53504 | 6 | 7 | |
| -dehnung | DIN 53504 | 400 | 400 | |
| Stoßelastizität | DIN 53512 | 32 | 30 | |

Beispiel 4
(Variation der Isocyanat-Komponenten)

Ausgehend von 100g Polyol lassen sich Reaktionsmassen mit folgenden Isocyanaten herstellen.

25g Isocyanat 1a (aromatisch) oder
33g Isocyanat 2 (aliphatisch) oder
30g Isocyanat 3 (cycloaliphatisch)

Während die Isocyanate 1a + 2 sich am besten im Eintopfverfahren mit dem Katalysatorgemisch vermischen lassen unter Zugabe von Zeolith 1, empfiehlt sich die Verarbeitung des Isocyanates 3 nach dem Prepolymerprinzip, indem man zuerst das Polyol 1 und Isocyanat 3 bei 100°C vorreagieren läßt und dann Zeolith 2 zusammen mit dem Katalysatorgemisch umsetzt. Alle 3 Umsetzungen erfolgen, ohne daß das Polyol 1 vorgetrocknet wurde. Nach Anhärten bei R.T. erfolgt die Aushärtung in 24h bei 80°C. Die Zusammensetzung der Reaktionsmassen und die erzielten Formstoffwerte sind in der Tabelle 2 eingetragen. Die Reaktionsformstoffe zeigen gute Elastomereneigenschaften.

Tabelle 2

| Zusammensetzung | | | | |
|---|---|---|---|---|
| Polyol | g | 100 | 100 | 100 |
| Isocyanat 1a | g | 25 | | |
| Isocyanat 2 | g | | 33 | |
| Isocyanat 3 | g | | | 30 |
| Zeolith 1 | g | 50 | 100 | |
| Zeolith 2 | g | | | 80 |
| Katalysator 1 | g | – | 0,3 | 0,2 |
| Amin 1 | g | 4,0 | 0,6 | 0,2 |
| NCO:OH:$H_2O$ | | 4:2:5 | 6:2:4,5 | 5,3:2:3,6 |
| Eigenschaften | | | | |
| Shore-A DIN 53505 | | 62 | 60 | 74 |
| Reiß-festigkeit | MPa | 4 | 4 | 5 |
| -dehnung DIN 53504 | % | 700 | 800 | 850 |
| Stoßelastizität DIN 53512 | % | 25 | 21 | 30 |
| Glastemperatur DIN 53445 | °C | –40 | –45 | –48 |

Beispiel 5
(Einfluss der Funktionalität auf die Formstoffeigenschaften)

Die Mischung von 300g Polyol 1, 150g Zeolith 1 und 15g Kaolin als Sedimenthemmer sowie Amin 1 und Katalysator 1 wird in 3 gleiche Teile unterteilt;
zu Teil 1 werden 25g Isocyanat 1a,
zu Teil 2 25g Isocyanat 1b,
zu Teil 3 25g Isocyanat 1c,
gegeben und zur Reaktion gebracht. Es erfolgt Vergießen in Plattenformen, härten bei 80°C/24h und Ausschneiden der Prüfkörper. Die mechanischen Werte sind in Tabelle 3 zusammengestellt.

Tabelle 3
Einfluß der MDI-Funktionalität
Zusammensetzung (Mengenangaben in g):

| Funktionalität | | 2,0 | 2,2 | 2,8 |
|---|---|---|---|---|
| Polyol 1 | | 100 | 100 | 100 |
| Isocyanat 1a | | 25 | – | – |
| Isocyanat 1b | | – | 25 | – |
| Isocyanat 1c | | – | – | 25 |
| Zeolith 1 | | 50,0 | 50,0 | 50,0 |
| Kaolin | | 5,0 | 5,0 | 5,0 |
| Amin 1 | | 4,5 | 4,5 | 4,5 |
| Katalysator 1 | | 0,9 | 0,9 | 0,9 |
| Gehalt an 2-Kern MDI | | 100% | 90% | 60% |
| Härtung 24h/80°C | | | | |
| Formstoffwerte | | | | |
| Shore Härte DIN 53505 | | A-62 | A-60 | A-68 |
| Reißfestigkeit DIN 53504 | MPa | 4 | 3 | 3 |
| -dehnung | % | 720 | 112 | 62 |
| Stoßelastizität DIN 53512 | % | 25 | 17 | 23 |
| Glastemperatur DIN 53445 | °C | –38 | –36 | –38 |

Beispiel 6
(Variation des Molgewichtes des Diols)

Ausgehend von Isocyanat 1a lassen sich im Eintopf-Verfahren mit verschiedenen Polyolen unter Zusatz von Zeolith 1 oder 2 Reaktionsmassen ohne Vakuumwärme-Vortrocknung durch Mischen herstellen, die mit Katalysatorgemischen bei 80°C/24h und bei 100°C/24h zu PUR-Elastomeren vernetzen, die in Abhängigkeit vom eingesetzten Polyol unterschiedliche mechanische Eigenschaften aufweisen. Zusammensetzung und Eigenschaften sind in Tabelle 4 zusammengestellt.

Tabelle 4
Zusammensetzung (Mengenangaben in g)

| | 1 | 2 | 3 | 4 |
|---|---|---|---|---|
| Polyol 2 | 100 | – | – | – |
| Polyol 6 | – | 100 | – | – |
| Polyol 1 | – | – | 100 | – |
| Polyol 3 | – | – | – | 100 |
| Isocyanat 1 | 75 | 40 | 25 | 20 |
| Zeolith 1 | – | 40 | 50 | 50 |
| Zeolith 2 | 60 | – | – | – |
| Katalysator 1 | – | – | – | 0,2 |
| Katalysator 2 | – | 0,2 | – | – |
| Amin 1 | – | 1,0 | – | – |
| Amin 2 | – | – | 0,18 | 4 |
| Umsetzungsverhältnis | | | | |
| NCO:OH:$H_2O$ | 12:10:2,6 | 6:4:3,6 | 4:2:5: | 4:2:5 |

Formstoffeigenschaften

| | | | | |
|---|---|---|---|---|
| Shore A DIN 53505 | 79 | 65 | 72 | 64 |
| Reißfestigkeit DIN 53505 (MPa) | 20 | 5 | 4 | 3 |
| -dehnung DIN 53504 (%) | 380 | 550 | 570 | 140 |
| Stoßelastizität DIN 53512 (%) | 8 | 7 | 35 | 35 |
| Glastemperatur DIN 53445 (°C) | +8 | – | –36 | –47 |

Beispiel 7

(Diol-Mischungen)

Werden wie in der Tabelle 5 angegeben 100g Polyol 1 mit verschiedenen Mengen (0/10/20/40g) Polyol 5 abgemischt und ohne Vakuum-Wärme-Aufbereitung mit Isocyanat 1a und Zeolith 2 zur Reaktionsmasse durch Rühren homogenisiert, so erhält man nach der Aushärtung in Metallplattenformen Reaktionsformstoffe mit zunehmender mechanischer Festigkeit. Mit steigenden Anteilen an Polyol 5 steigt der Martensgrad von <R.T. bis +100°C. Die Formstoffe zeigen einen segmentierten Aufbau. Mit fallenden Hartsegmentanteilen nimmt die Reißfestigkeit von 60 auf 4 MPa ab und entsprechend die Reißdehnung von 2% auf 500% zu.

Tabelle 5

Zusammensetzung (Mengenangaben in g)

| | | | | |
|---|---|---|---|---|
| Isocyanat 1a | 25 | 80 | 136 | 247 |
| Polyol 1 MG 2000 | 100 | 100 | 100 | 100 |
| Polyol 5 MG 90 | 0 | 10 | 20 | 40 |
| Zeolith 2 | 50 | 120 | 180 | 300 |
| Amin 1/Katalysator 1 | 0,13/0,2 | | | |
| Umsetzungsverhältnis NCO:OH:$H_2O$ | 4:2:5 | 4:2:1,8 | 4:2:1,6 | 4:2:1,5 |
| Härtungsbedingungen | 24 h 80°C | 24 h/80°C + 2 h/130°C | | |

| Formstoffeigenschaften | | | | | |
|---|---|---|---|---|---|
| Formbeständigkeit DIN 53458 nach Martens | °C | R.T. | R.T. | 44 | 100 |
| Biegefestigkeit DIN 53452 | MPa | 0,3 | 10 | 60 | 110+ |
| Schlagzähigkeit DIN 53453 | kJ/m² | durch | durch | 20 | 13 |
| Reißfestigkeit DIN 53504 | MPa | 4 | 20 | 40 | 60 |
| -dehnung | % | 500 | 70 | 11 | 2 |

Beispiel 8

(Aushärtung in verschiedenen Umgebungsmedien)

Die Reaktionsmasse bestehend aus:

100g Polyol 1
25g Isocyanat 1a
50g Zeolith 1
5g Kaolin als Sedimenthemmer

katalysiert wie in der Tabelle 6 aufgeführt, wird ohne Aufbereitung in mit Trennmitteln behandelte Formen im DIN A4-Format im Spiegelguß 4 und 2 mm stark gegossen. Die Anhärtung erfolgt im Kontakt mit folgenden Umgebungsmedien: 1. Feuchtraum bei 23°C/100% r.F.. 2. in einer Wanne mit Wasser übergossen und 3. an der Laborluft bei 23°C/50% relativer Luftfeuchtigkeit. Die Platten härten, ohne eine Schaumschicht auszubilden. Nach dem Entformen werden sie bei 80°C nachgehärtet. Bei vergleichbarer Stoßelastizität und Glastemperatur zeigen die Platten gute Reißfestigkeit und -dehnung über 100%. Wird zum Vergleich Zeolith 1 durch Zeolith 3 ausgetauscht, entsteht eine Platte mit einer Oberflächenschaumschicht.

Tabelle 6

Umsetzungsverhältnis: NCO:OH:$H_2O$ = 4:2:5

| | | | | |
|---|---|---|---|---|
| Polyol 1 | g | 100 | 100 | 100 |
| Isocyanat 1a | g | 25 | 25 | 25 |
| Zeolith 1 | g | 50 | 50 | 50 |
| Kaolin | g | 5 | 5 | 5 |
| Amin 1 | g | 4 | 4 | 2 |
| Katalysator 1 | g | 0,2 | 0,2 | 0,45 |

Aufbereitung: Keine Wärme-Vakuum-Trocknung

| | | | |
|---|---|---|---|
| Umgebungsmedium während der Härtung | Laborluft 50% r.F. 23°C | Feuchtraum 100% r.F. 23°C | Unter Wasser 20°C |
| Nachhärten im Ofen | 4 h/80°C | 16 h/80°C | 4 h/80°C |

| Formstoffeigenschaften | | | |
|---|---|---|---|
| Shore Härte A DIN 53505 | 62 | 64 | 85 |
| Reißfestigkeit DIN 53504 | 4 | 3 | 5 |
| -dehnung | 723 | 265 | 600 |
| Stoßelastizität DIN 53512 | 25 | 24 | 26 |
| Glastemperatur DIN 53445 | –35 | –36 | –36 |

Beispiel 9
(Verbundwerkstoff)

Auf Glasoberflächen bildet sich eine mehr oder weniger geschlossene Wasserhaut aus. Die Beseitigung dieser Wasserfilme ist aufwendig und kostet Zeit und Energie. Da bei dem erfindungsgemäßen Verfahren Feuchte nicht durch Blasenbildung stört, ist es möglich, Glasfasern sowohl als Textilgewebe als auch als Kurzfaser ohne Vorbehandlung in die Reaktionsmasse einzuarbeiten. Mit der Reaktionsmasse aus Beispiel 2 läßt sich ein Laminat mit 60% Glas durch Einstreichen aufbauen oder bis zu 70% Glaskurzfasern einrühren. Ohne Vortrocknung ließen sich die Reaktionsformstoffe als Plattenware 2 und 4 mm stark aushärten bei 60 und 80°C. Die Formstoffwerte zeigen gute Elastomerwerte (Tabelle 7).

Tabelle 7

| | | Bindemittel | Glaslaminat | Glasfaser |
|---|---|---|---|---|
| Zusammensetzung: NCO:OH:$H_2O$ = 4:2:5 | | | | |
| Isocyanat 1a | g | 25 | 25 | 25 |
| Polyol 1 | g | 100 | 100 | 100 |
| Kaolin | g | 5 | 5 | 5 |
| Zeolith 1 | g | 50 | 50 | 50 |
| Amin 1 | g | 0,13 | 0,13 | 0,13 |
| Katalysator 1 | g | 0,2 | 0,2 | 0,2 |
| Lagenzahl auf 4 mm | Zahl | – | 16 | – |
| Kurzglasfasergehalt | % | – | – | 70 |
| Aufbereitung | Keine Wärme-Vakuum-Vortrocknung | | | |
| Härtung | 16 h/60°C + 4 h/80°C | | | |

| Formstoffwerte | | | | | |
|---|---|---|---|---|---|
| Glasfasergehalt | | % | 0 | 61 | 70 |
| Shore Härte | DIN 53505 | | A 72 | – | A-75 |
| Martensgrad | DIN 53458 | °C | <RT | 46 | <RT |
| Biegefestigkeit | DIN 53452 | MPa | 0,3 | 32 | 0,6 |
| Randfaserdehnung | | % | 3,5 | 6 | 3,5 |
| Schlagzähigkeit | 23°C | kJ/m² | – | 55 | – |
| DIN 53453 | –30°C | | | | 40 |
| Zugfestigkeit | DIN 53504 | MPa | 4–6 | 72 | 3 |
| -dehnung | | % | 400–600 | 1,6 | 280 |
| Wärmedehnzahl | VDE 0304/I | $10^{-6}$ $K^{-1}$ | – | 0–3 | 90 |
| Glastemperatur | DIN 53445 | °C | –38 | | –34 |

Beispiel 10
(Verzweigte Polyole (Triole) liefern zähharte PUR)

Werden 100 g Polyol 4 mit steigenden Mengen Isocyanat 1a, wie in Tabelle 8 angegeben, mit Zeolith 1 und Amin 1 ausgehärtet, so erhält man ohne Vakuum-Wärme-Aufbereitung der Reaktanden aus mit Trennmittel behandelten 4 mm Plattenformen Formstoffe mit steigendem Martensgrad, entsprechend dem ansteigenden Vernetzungsgrad (Tabelle 8).

Wird Zeolith 1 gegen Zeolith 3 in den Reaktionsmassen ausgetauscht, so gelangt man trotz Vakuumaufbereitung zu Formstoffen mit nicht ausreichendem Martensgrad (Spalte 1 und 2). Bei hohem NCO-Überschuß und Abwesenheit von Absorbatwasser entstehen heterogene Platten mit Innenblasen und Oberflächen-Schrumpflunkern (Eisblumenlack, Borkenkäfer). Einwandfreie Prüfkörper lassen sich nicht herausarbeiten (Spalte 5).

Tabelle 8
Zu Beispiel 10: Verzweigtes Polyol mit Diisocyanat

| Spalte in G.T. | 1 | 2 | 3 | 4 | 5 |
|---|---|---|---|---|---|
| Zusammensetzung | | | | | |
| Polyol 4 | 100 | 100 | 100 | 100 | 100 |
| Isocyanat 1a | 100 | 100 | 100 | 167 | 167 |
| Zeolith 1 | – | – | 50 | 100 | |
| Zeolith 3 | 10 | 50 | – | – | 100 |
| Amin 1 | – | – | 1,2 | | |
| Amin 4 | – | 0,5 | – | – | 1,5 |
| Quarzmehl | – | – | – | – | – |
| NCO:OH:$H_2O$ | 14:12:0 | 14:12:0 | 14:12:4 | 12:6:4,5 | 12:6:0 |

Tabelle 8
Zu Beispiel 10: Verzweigtes Polyol mit Diisocyanat

| Spalte in G.T. | 1 | 2 | 3 | 4 | 5 |
|---|---|---|---|---|---|
| Vakuumaufbereitung | ja | ja | nein | nein | ja |
| Härtungsbedingungen | 1 h Raumtemperatur bis 60°C + 24 h/80°C | | | | |
| Formstoffeigenschaften | | | | | heterogen |
| Martensgrad (°C) DIN 53458 | 60 | 57 | 70 | 100 | Schrumpflunker |
| Biegefest (MPa) DIN 53452 | 114 | 108 | 11 | 133 | Schaumentwicklung |
| Schlagzähigkeit DIN 53453 (kJ/m²) | 30 | 12 | 11 | 20 | Blasenbildung |

Beispiel 11
(Poly-Oxazolidon)-harnstoff-Harze)

Epoxidreaktionsharze werden mit Isocyanat 1 a im Äquivalentverhältnis Isocyanat: Epoxid = 2:1 bei 100–300°C über 4 Stunden in den in der Tabelle 9 aufgeführten Mengen unter Rühren zur Reaktion gebracht. Es entstehen flüssige Polyoxazolidon-Isocyanate. Es wird auf Raumtemperatur abgekühlt. Nach dem Zumischen von Aminkatalysatoren und Zeolith 1 in den angegebenen Mengen ist die Reaktionsmasse gießfähig.

Sie wird zur Härtung in DIN A4-Plattenformen gegossen und bei 23°C/80°C und 130°C über 24 Stunden ausgehärtet. Bei Durchführung des erfindungsgemäßen Verfahrens unter Verwendung von Zeolith 1 entstehen homogene Formstoffe mit guten mechanischen Werten. (Spalte 4–7). Sie werden auch erhalten, wenn die Reaktion im Eintopfverfahren durchgeführt wird. Wird dagegen nach Vakuum-Wärme-Aufbereitung mit Zeolith 3P (Spalte 3), mit getrocknetem Dolomitmehl (Spalte 2) oder nur mit Aminkatalysator (Spalte 1) gearbeitet, so erhält man inhomogene Formstoffplatten mit Blasen. Prüfkörper liefern niedrige Martensgrade unter 100°C. Die inhomogenen Prüfkörper liefern trotz Vakuumaufbereitung Durchschlagfestigkeiten von nur 12 kV/mm, die homogenen, nach dem erfindungsgemäßen Verfahren hergestellten weisen ca. 50% bessere Werte (17 kV/mm) ohne Vakuum-Wärme-Vorbehandlung auf. Weitere Einzelheiten siehe Tabelle 9).

Ausgehend von Molverhältnissen NCO : Epoxid wie 4:1 oder 6:5 erhält man gute Formstoffwerte mit Zeolith 1 bzw. 2 (Tabelle 10).

Tabelle 9
Vergleichsbeispiele

| Zusammensetzung (Gew.-Teile) | 1 | 2 | 3 | 4 | 5 | 6 | 7 |
|---|---|---|---|---|---|---|---|
| Epoxidharz 1 | 70 | 70 | 70 | 70 | 70 | – | – |
| Epoxidharz 2 | – | – | – | – | – | 50 | – |
| Epoxidharz 3 | – | – | – | – | – | – | 70 |
| Isocyanat 1 a | 100 | 100 | 100 | 100 | 100 | 100 | 100 |
| Amin 2 | 0,2 | 0,2 | 0,2 | 0,4 | 0,4 | 0,4 | 0,4 |
| Dolomitmehl | – | 150 | – | – | – | – | – |
| Zeolith 1 | – | – | – | 100 | 150 | 100 | 100 |
| Zeolith 3P | – | – | 10 | – | – | – | – |
| Umsetzungsverhältnis NCO:EP:$H_2O$ | 4:2:0 | 4:2:0 | 4:2:0 | 4:2:2,2 | 4:2:3 | 4:2:2,1 | 4:2:2,2 |
| Vakuum-Wärme-Aufbereitung | ja | ja | ja | nein | nein | nein | nein |
| Härtungsbedingungen | 4 h/80°C und 24 h/130°C | | | | | | |
| Martensgrad DIN 53458 °C | 67 | 96 | 79 | 125 | 157 | 136 | 140 |
| Biegefestigkeit DIN 53452 MPa | 65 | 48 | 106 | 95 | 110 | 140 | 120 |
| Schlagzähigkeit DIN 53453 kJ/m² | 3 | 1 | 5 | 8 | 5 | 11 | 7 |
| Durchschlagfestigkeit IEC 243 kV/mm | 11 | – | 13 | 17 | – | – | – |
| Struktur | inhomogen Blasen/Lunker | | | homogen | | | |

Tabelle 10

| Zusammensetzung in g | | 1 | 3 |
|---|---|---|---|
| Epoxidharze 1 | | 40 | 120 |
| Isocyanat 1 a | | 100 | 100 |
| Amin 4 | | – | 1,8 |
| Amin 2 | | 0,5 | – |
| Zeolith 1 | | 100 | – |
| Zeolith 2 | | – | 72 |
| Umsetzungsverhältnis: | | | |
| $NCO:EP:H_2O$ | | 8:2:4,5 | 12:10:2,4 |
| Vakuum-Wärme-Aufbereitung | | nein | nein |
| Härtungsbedingungen | | 23°/4 h und | 130°C/24 h |
| Formstoffwerte | | | |
| Martensgrad DIN 53458 | °C | 157 | 155 |
| Biegefestigkeit DIN 53452 | MPa | 140 | 120 |
| Schlagzähigkeit DIN 53453 | $kJ/m^2$ | 11 | 8 |

Beispiel 12
(Aushärtung in Holzformen (Abformmassen))

Es wird eine Plattenform 30×20×3 cm aus Sperrholzplatten und -leisten zusammengesetzt und mit einem handelsüblichen Trennmittel auf Wachsbasis behandelt, dem 3% Amin 1 zugesetzt sind. In die Form wird eine Masse bestehend aus

500 g Polyol 4
50 g Zeolith 3P
500 g Zeolith 1
0,6 g Amin 1
500 g Isocyanat 1 b

nach Homogenisieren bei RT eingefüllt und bei RT während 24 h gehärtet. Es entsteht eine Platte ohne Schaumschicht an den der Holzform zugewandten Flächen.

Beispiel 13
(Kabelverguß)

Es werden zwei Probekörper mit Elektrodenanordnung für 1 min-Prüfspannung, wie in DIN 57291/2-VDE 0291/2 Punkt 6,8 beschrieben, angefertigt. Diese Modell-Kabelmuffen dienen zur Ermittlung der 1 min-Haltespannung zwischen Kugelelektroden von 20 mm Durchmesser im Abstand von 2 mm.

Eine Reaktionsmasse aus

700 g Polyol 1
490 g Zeolith 1
0,85 g Amin 1
175 g Isocyanat 1 a

wird durch Rühren bei Raumtemperatur erhalten und in 2 gleiche Teile geteilt.

Die erste Hälfte wird in die trockene Kabelmuffe, die zweite in die zuvor mit Wasser gefüllte Muffe eingegossen, so daß ein Verdrängungsverguß stattfindet. Die spezifisch schwerere Kabelmasse sinkt auf den Boden und verdrängt das Wasser, so daß die Kugelelektroden vollkommen eingebettet werden. Die Härtung erfolgt bei Raumtemperatur über 24 Stunden.

Es tritt keine Schaumbildung wärend des Gießvorgangs und der Härtung an der Phasengrenze Harz/Wasser auf. Nach der Aushärtung wird Spannung angelegt: 1 min 10 kV und dann eine weitere min 20 kV. Beide Spannungsbelastungen werden gehalten.

Im Vergleichsversuch werden zwei weitere Probemuffen in der gleichen Weise vergossen mit einer Kabelmasse hergestellt nach dem Stand der Technik.

500 g Polyol 4
500 g Polyol 7
6 g Amin 4
100 g Zeolith 3P

werden als Polyol-Komponente im Vakuum von 2 mbar und bei 60°C aufbereitet, bis keine Blasen mehr aufsteigen. Nach Abkühlen auf Raumtemperatur wird die Polyisocyanat-Komponente:

500 Gew.-Teile Isocyanat 1 c

bei Normaldruck und -temperatur untergemischt. Die trockene wie die nasse Muffe werden ausgegossen. Aus der wassergefüllten Muffe wird das Wasser durch das Harz verdrängt. Nach dem Aushärten bei Raumtemperatur über 24 Stunden läßt die Oberfläche der nassen Muffe Blasenbildung erkennen. Während die trockene Muffe die 10 und 20 kV je 1 min aushält, schlägt die nasse Muffe bei der Spannungssteigerung bei 6 kV durch. Die Haltespannung von 10 kV wird nicht erreicht.

Die nach dem erfindungsgemäßen Verfahren hergestellte Vergußmasse zeigt das für die Erfindung charakteristische Merkmal der Unempfindlichkeit der Polyetherpolyurethanpolyharnstoff-Masse gegen Wasser, das im Praxisfall bei der Muffenmontage als Regen- oder Grundwasser in die Muffenhalbschalen vor dem Vergießen eindringen kann.

Beispiel 14
(Leicht-Werkstoffe)

Durch Rühren bei Raumtemperatur wird eine Polyolkomponente hergestellt aus:

100 g Polyol 4
10 g Hohlkugeln
0,25 g Amin 1

Bei den Hohlkugeln handelt es sich um Phenolharzkugeln (Phenolic Plastic BIO 0930 der Firma Union Carbide, New York). Als Isocyanatkomponente wird ein Gemisch aus
100 Gew.-Teilen Isocyanat 1 a
50 Gew.-Teilen Zeolith 1
35 Gew.-Teilen Hohlkugeln
verwendet. Nach Mischen der Reaktanden beträgt das Potlife 10 min. Die Masse wird in 10 mm Metallplattenformen gegossen, bei RT angehärtet und 16 Stunden bei 60°C ausgehärtet. Die entformte Platte zeigt eine konkave Oberfläche an der der Luft zugewandten Eingießkante und Bruchflächen von nicht geschäumter Struktur.

## Patentansprüche

1. Verfahren zur Herstellung von nichtgeschäumten Formkörpern nach der Gießharztechnologie durch Umsetzung in geschlossenen oder offenen Formen von
a) organischen Polyisocyanaten mit
b) organischen Polyhydroxylverbindungen und/oder Polyepoxiden unter Einhaltung eines Äquivalentverhältnisses von Isocyanatgruppen der Komponente a) zu Hydroxyl- und/oder Epoxidgruppen der Komponente b) von 1,1 : 1 bis 6 : 1 unter Mitverwendung eines Kettenverlängerungsmittels c) in einer solchen Menge, die dem aus dem Verhältnis a) : b) resultierenden Isocyanatüberschuß zumindest äquivalent ist, dadurch gekennzeichnet, daß man als Kettenverlängerungsmittel c) Wasser in Form eines wasserhaltigen Alkalialumosilikats oder in Form eines wasserhaltigen Alkali-Erdalkali-Alumosilikats vom Zeolithtyp verwendet.

2. Verfahren gemäß Anspruch 1, dadurch gekennzeichnet, daß man die Umsetzung nach dem Einstufenprinzip durch Umsetzung der Komponente a) mit der Komponente b) durchgeführt, wobei das wasserhaltige Alkalialumosilikat vorab der Komponente a) und/oder der Komponente b) zugemischt worden ist.

3. Verfahren gemäß Anspruch 1, dadurch gekennzeichnet, daß man die Umsetzung nach dem Zweistufenprinzip durchführt, wobei man zunächst aus den Komponenten a) und b) ein freie Isocyanatgruppen aufweisendes Prepolymer herstellt und dieses anschließend mit der Komponente c) zu Reaktion bringt.

4. Verfahren gemäß Anspruch 1–3, dadurch gekennzeichnet, daß man die Umsetzung in Gegenwart der in der Gießharztechnologie üblichen Hilfs- und Zusatzmittel durchführt.

## Claims

1. Process for the production of unfoamed moulded articles by the casting resin technology, including the reaction, inside closed or open moulds, of
a) organic polyisocyanates with
b) organic polyhydroxyl compounds and/or polyepoxides at an equivalent ratio of isocyanate groups of component
a) to hydroxyl and/or epoxide groups of component
b) of from 1,1 : 1 to 6 : 1, using a chain lengthening agent c) in a quantity which is at least equivalent to the isocyanate excess resulting from the ratio of a) : b), characterised in that the chain lengthening agent c) used is water in the form of a water-containing alkali metal aluminosilicate or in the form of a water-containing alkali metal/alkaline earth metal aluminosilicate of the zeolite type.

2. Process according to claim 1, characterised in that the reaction is carried out on the one-stage principle by reacting component a) with component b), the water-containing alkali metal aluminosilicate having previously been mixed with component a) and/or component b).

3. Process according to claim 1, characterised in that the reaction is carried out on the two-stage principle, a prepolymer containing free isocyanate groups being first prepared from components a) and b) and this prepolymer being then reacted with component c).

4. Process according to claims 1 to 3, characterised in that the reaction is carried out in the presence of the auxiliary agents and additives conventionally used in casting resin technology.

## Revendications

1. Procédé de fabrication de corps moulés sans formation de mousse suivant la technologie de la résine coulée, en faisant réagir, dans des moules fermés ou ouverts,
a) des polyisocyanates organiques avec
b) des composés polyhydroxylés et/ou polyépoxy organiques sous respect d'un rapport d'équivalence entre les groupes isocyanate du composant a) et les groupes hydroxyle et/ou époxy du composant b) de 1,1 : 1 à 6 : 1, avec utilisation simultanée d'un agent d'allongement de chaîne c) suivant une quantité telle qu'elle équivaut au moins à l'excédent d'isocyanate résultant du rapport a) : b), caractérisé en ce qu'on utilise, comme agent d'allongement de chaîne c), de l'eau sous forme d'un aluminosilicate alcalin ou d'un aluminosilicate alcalin-alcalino-terreux contenant de l'eau, du type zéolithe.

2. Procédé selon la revendication 1, caractérisé en ce qu'on exécute la réaction suivant le principe en une phase en faisant réagir le composant a) avec le composant b), l'aluminosilicate alcalin aqueux ayant préalablement été mélangé au composant a) et/ou au composant b).

3. Procédé selon la revendication 1, caractérisé en ce qu'on exécute la réaction selon le principe en deux phases, en fabriquant d'abord un prépolymère présentant des groupes isocyanate libres au départ des composants a) et b), et en faisant ensuite réagir ce prépolymère avec le composant c).

4. Procédé selon les revendications 1 à 3, caractérisé en ce qu'on exécute la réaction en présence des substances auxiliaires et additionnelles usuelles dans la technologie de la résine coulée.